(19) Europäisches Patentamt
European Patent Office
Office européen des brevets

(11) Veröffentlichungsnummer : **0 041 990**
**B1**

(12) **EUROPÄISCHE PATENTSCHRIFT**

(45) Veröffentlichungstag der Patentschrift : **03.04.85**

(51) Int. Cl.[4] : **C 09 K 5/06**

(21) Anmeldenummer : **81900143.9**

(22) Anmeldetag : **22.12.80**

(86) Internationale Anmeldenummer : **PCT/DE 80/00191**

(87) Internationale Veröffentlichungsnummer : **WO/8101859 (09.07.81 Gazette 81/16)**

# (54) THERMISCHES ENERGIESPEICHER-SYSTEM ZUM SPEICHERN VON PHASENUMWANDLUNGSENTHALPIE.

(30) Priorität : **22.12.79 DE 2952166**

(43) Veröffentlichungstag der Anmeldung : **23.12.81 Patentblatt 81/51**

(45) Bekanntmachung des Hinweises auf die Patenterteilung : **03.04.85 Patentblatt 85/14**

(84) Benannte Vertragsstaaten : **AT CH FR GB LI LU NL SE**

(56) Entgegenhaltungen :
**EP-A- 0 000 099**
**EP-A- 0 019 573**
**DE-A- 1 928 694**
**DE-A- 2 639 173**
**GB-A- 708 471**
**GB-A- 1 561 755**
**US-A- 4 003 426**
**Ullmann's Enzyklopädie der technischen Chemie, Bd. 18 (1979), S. 325**
**Römpp (1950), S. 1139,1140, 1554**
**Bayer. Lehrbuch der org. Chemie (1963), S. 309,310**
**Gollemann/Wiberg, Lehrbuch der Anorg. Chemie (1955), S. 216**

(73) Patentinhaber : **NEUMANN, Hans-Werner**
**Tinsdaler Heideweg 90**
**D-2000 Hamburg 56 (DE)**

(72) Erfinder : **NEUMANN, Hans-Werner**
**Tinsdaler Heideweg 90**
**D-2000 Hamburg 56 (DE)**

(74) Vertreter : **UEXKÜLL & STOLBERG Patentanwälte**
**Beselerstrasse 4**
**D-2000 Hamburg 52 (DE)**

EP 0 041 990 B1

Anmerkung : Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

Jouve, 18, rue St-Denis, 75001 Paris, France

## Beschreibung

Gebiet der Erfindung

Die Erfindung betrifft ein thermisches Energiespeicher-System zum Speichern von Phasenumwandlungsenthalpie mittels Wechselwirkung zu diesem Zweck ausgewählter Substanzen in einem Mehrkomponenten-System, das mindestens ein Stoffsystem mit mehreren Phasenumwandlungen, einen Stabilisator zur Erhöhung der Zyklenstabilität des Stoffsystems und einen Kristallisationsinitiator zur Verbesserung der Reversibilität umfaßt.

Stand der Technik

Als Speichermedium ist bisher im Niedertemperaturbereich vor allem Glaubersalz bekannt, das nur einen Phasenumwandlungspunkt bei einer Temperatur von 32,2 °C hat. Man hat zwar auch versucht, mit niedriger schmelzenden Salzhydraten zu arbeiten, z. B. $CaCl_2 \times 6H_2O$ (Calciumchlorid-hexahydrat; $T_U = 28{,}9$ °C), das jedoch allenfalls für die Speicherung von Abluftwärme in Fabrikationsgebäuden geeignet ist. Für diese Materialien sind, bedingt durch die geringen Phasenumwandlungsenthalpien, z. B. bei $CaCl_2 \times 6H_2O$ mit $\Delta HF = 174$ kJ/kg, beträchtliche Speichervolumina erforderlich, die eine praktische Verwertung letztendlich ausschließen. Bei Glaubersalz besteht der Nachteil, daß es inkongruent schmilzt; daraus folgt, daß nur ein Teil des geschmolzenen Glaubersalzes rekristallisiert und das sedimentierte spezifisch schwerere Anhydrid (Tenardid) nicht mehr an der Rekristallisation teilnehmen kann, zumal die Löslichkeit des Anhydrids ($Na_2SO_4$) mit wachsender Temperatur abnimmt. Es findet mit anderen Worten ein irreversibler Ausfällungsprozeß statt, so daß man schon nach wenigen Zyklen einen wesentlichen Kapazitätsverlust des Ausgangssystems hinnehmen muß. Im wesentlichen ist bei Glaubersalz nur die Umwandlungs enthalpie nutzbar, d. h. die Änderung der inneren Energie als der nicht fühlbaren (latenten) Änderung des Wärmeinhalts dieses Stoffsystems während der Phasenumwandlung. Eine Nutzung der spezifischen Wärme des Glaubersalzes ist praktisch nicht möglich, dadurch die vorstehend genannte Problematik des inkongruenten Schmelzens nur ein kleiner Temperaturbereich nutzbar ist und Glaubersalz lediglich einen Phasenumwandlungspunkt aufweist. Die spezifische Wärme im Anfahrbereich ist wirtschaftlich von untergeordnete Bedeutung.

Man hat nun versucht, die Zyklenstabilität des Glaubersalzes durch Schaffung eines Mehrkomponenten-Systems zu verbessern, indem man dem Stoffsystem Glaubersalz eine Zusatzkomponente in Form eines Impfmediums hinzufügt (US-PS 26 67 664). Dieses ist in der Regel Borax ($Na_2B_4O_7 \times 10H_2O$). Hierbei tritt jedoch ein weiteres Problem auf, nämlich die sog. Stratifikation, d. h. eine Entmischung des Speichermediums und der Impfkeime, da Borax spezifisch schwerer ist als Glaubersalz. Eine solche Entmischung führt aber letzten Endes dazu, daß der Prozeß irreversibel wird. Eine Umkehrung ist allenfalls durch den statistischphysikalischen Vorgang einer heterogenen Keimbildung denkbar. Um ein Entmischen des Glaubersalz-Borax-Systems zu verhindern, ist es weiterhin bekannt, als Stabilisator Verdickungsstoffe wie z. B. Sägespäne, Papierpulpe, Silicagel sowie Diatomeenerde zu verwenden, um dadurch das Sedimentieren zu verzögern. Solche Verdickungsmittel können, von statistischen Zufallsknäuels abgesehen, keine hinreichend stabilen und dichten Molekulargerüste mit ausgeprägten regulären Tertiär- bzw. Quatärstrukturen ausbilden, sondern sie bilden lediglich Linearmoleküle bzw. Linearmolekülketten und -bänder, die nicht die Fähigkeit haben, Salzhydrat und Impfkeim stabilisierend einzuschließen, d. h. der Sedimentation entgegenzuwirken. Zudem haben einige Dickungsmittel wie z. B. Silicagel die schädliche Nebenwirkung, die Keimbildungsfähigkeit der Impfkeime zu hemmen.

Um den Nachteilen unzureichender Keimbildung zu begegnen, ist es bekannt, auf mechanischem Wege, z. B. durch Schütteln, eine Keimbildung zu induzieren. Ein solches Verfahren ist bei praktisch verwertbaren, insbesondere großvolumigen Wärmespeichern, werder technisch noch wirtschaftlich sinnvoll.

Weitere Versuche finden sich bei Glaubersalz-Mehrkomponenten-Systemen in Ansätzen, in denen man zur Verhinderung der Entmischung durch den im flüssigen Zustand befindlichen Wärmespeicher flüssige Öle oder Paraffin hindurchpumpt (DE-OS 26 07 168). Daraus ergeben sich neue Probleme wie Koaleszenz, Kristallverschleppung, Cavernenbildung und vor allen dingen Korrosion.

Weiterhin sind für Wärmespeichermedien Versuche mit di-Natriumhydrogenphosphat-dodecahydrat bekannt, das zum Zwecke der Erhöhung der Zyklenzahl mit Wasser und ggf. Harnstoff versetzt und zur Keimbildungsinitiierung mehrfach geschmolzen und geschüttelt wird (s. Europ. Patentanmeldung 78 10 1487.3). Beim Schmelzen dieser Substanz geht das Dodecahydrat am Phasenumwandlungspunkt über in das Heptahydrat und fünf Moleküle Kristallwasser. Dabei sedimentiert das spezifisch schwerere Heptahydrat in der Schmelze, woran auch ein Wasserüberschuß nicht ändert, und es hat daher an der folgenden Rekristallisation keinen Anteil, so daß die Reversibilität nicht gewährleistet ist. — Um dem entgegenzuwirken, hat man versucht (US-PS 26 77 367), mit Hilfe von Kristallisationspromotoren in Form von Glaspartikeln mit unregelmäßiger Oberfläche zu arbeiten. Der angestrebte Erfolg konnte damit nicht erzielt werden.

In der DE-OS 19 28 694 wird ein Speicherkörper mit einem Impfkristalle enthaltenden Speicherstoff beschrieben, der mit Hilfe einer Gerüststruktur immobilisiert ist, so daß der Speicherkörper auch dann, wenn der Speicherstoff geschmolzen ist, formbeständig ist. Dadurch soll auf Tanks zur Aufnahme des Speicherkörpers verzichtet werden können, wobei allerdings der Speicherkörper zur Verhinderung des Ausdampfens mit einem Überzugsmaterial versehen werden muß. Während in dieser Druckschrift die geeigneten Gerüststrukturen in großer Zahl detailliert beschrieben werden, gehen die Angaben zum eigentlichen Speicherstoff und zu den Impfkristallen nicht über den oben diskutierten Stand der Technik hinaus.

Auch in der europäischen Patentanmeldung 0000099 wird ein thermisches Energiespeicher-System beschrieben, bei dem eine Immobilisierung des Speicherstoffes erfolgt. Hierfür wird ein synthetisches Polymer mit seitlichen Carbon- oder Sulfonsäuregruppen, das mit Kationen mehrwertiger Metalle vernetzt ist, vorgeschlagen. Als Kristallisationsinitiator wird in Übereinstimmung mit dem übrigen Stand der Technik (siehe oben) Borax empfohlen. In der Beschreibungseinleitung dieser europaïschen Patentanmeldung ist darüber hinaus erwähnt, daß zur Vermeidung der Sedimentation im Stand der Technik vorgeschlagen worden ist, Verdickungsmittel wie z. B. Cellulosepolymere, Stärke, Alginate und Ton einzusetzen. Gleichzeitig wird aber darauf hingewiesen, daß die organischen Verdickungsmittel gegenüber Hydrolyse und bakteriellen und enzymatischem Angriff instabil sind. Dementsprechend werden gemäß dieser Patentanmeldung diese Verdickungsmittel nicht eingesetzt, sondern das zuvor genannte synthetische Polymer verwendet.

In der DE-OS 26 39 173 wird schließlich eine Mischung für die Speicherung von Wärmeenergie beschrieben, die gekennzeichnet ist durch ein Salzhydrat, einen Keimbildner und ein thixotropes Mittel, wobei das thixotrope Mittel eine tonartige Substanz mit lattenähnlichen Teilchen ist. Wie sich aus der Beschreibung (beispielsweise Seite 11 unten) ergibt, verfestigt sich die Mischung ziemlich schnell zu einem Gel, d. h. auch hier wird eine Immobilisierung des Speicherstoffs bewirkt. Im Zusammenhang mit den bei der Herstellung dieser Wärmespeichermischungen eingesetzten Tonsuspensionen findet sich darüber hinaus die allgemein gehaltene Bemerkung, daß die Viskosität dieser Suspensionen durch Additive, Dispergiermittel in wäßrigen Systemen sowie grenzflächenaktive Mittel in nicht-wäßrigen Medien modifiziert werden kann. Auch in dieser Druckschrift wird im Rahmen der Diskussion des Standes der Technik auf den bekannten Vorschlag der Verwendung von organischen oder anorganischen Verdickungsmitteln eingegangen. Deren Einsatz wird aber ebenso wie in der europäischen Patentanmeldung 0000099 abgelehnt. Als Kristallisationsinitiator wird erneut ausschließlicht Borax empfohlen.

Bei allen vorstehend geschilderten Energie-Speichersystemen macht man nur von einem einzigen Phasenumwandlungspunkt Gebrauch, wodurch die Nutzung spezifischer Wärme und damit der Nutzgrad des Gesamtsystems stark eingeschränkt ist.

Aufgabe

Der Erfindung liegt die Aufgabe zugrunde, ein thermisches Energiespeicher-System der eingangs beschriebenen Art zu schaffen, das gegenüber Systemen mit bekannten Medien eine gesteigerte Energiedichte bei erhöhter Zyklenstabilität aufweist.

Zur Lösung dieser Aufgabe wird ein thermisches Energiespeicher-System zum Speichern von Phasenumwandlungsenthalpie mittels Wechselwirkung zu diesem Zweck ausgewählter Substanzen in einem Mehrkomponenten-System, das mindestens ein Stoffsystem mit mehreren Phasenumwandlungen, einen Stabilisator zur Erhöhung der Zyklenstabilität des Stoffsystems, der die Form eines dreidimensionalen Molekülgerüstes hat, das kanal- bzw. röhren- oder netzförmige Einschlußverbindungen bildet, und einen Kristallisationsinitiator zur Verbesserung der Reversibilität mit einem dem Stoffsystem angepaßten, hoch angesiedelten Phasenumwandlungspunkt umfaßt, vorgeschlagen, das dadurch gekennzeichnet ist, daß der Stabilisator aus 60 bis 85, bevorzugt 80 Gew.% $\alpha[1 \rightarrow 4]$, $\alpha[1 \rightarrow 6]$ glycosidisch verknüpftem Polysaccharid und 15 bis 40, bevorzugt 20 Gew.% $\alpha[1 \rightarrow 4]$-Glucan besteht und in dem Mehrkomponenten-System ein Dispersionsagens enthalten ist.

In einer bevorzugten Ausführungsform wird die Wirkung der Stabilisatoren b. durch zusätzliche Verwendung von Vernetzungsmitteln wie Methanol, Ethanol und insbesondere Formaldehyd gesteigert. Ferner hat es sich als vorteilhaft erwiesen, die Keimbildungsfähigkeit und -häufigkeit bzw. Kristallwachstumsgeschwindigkeit durch eine weitere Vorgabe einer sterischen Information durch epitaxische Impfkristalle, nämlich Natriumthiosulfatpentahydratkristalle zu verbessern, wodurch die durch den Kristallisationsinitiator bedingte kurze Verweildauer der unterkühlten Schmelze des Phasenumwandlungssystems im metastabilen Zustand noch weiter reduziert wird, so daß der unvermeidbare Unterkühlungspeak noch weiter unterdrückt wird.

Vorteile

Ein solches System weist eine optimale Energiedichte auf. Die Energiedichte kann über eine außerordentlich hohe Zyklenzahl genutzt werden, da ein Kapazitätsverlust durch Ausfällen von Komponenten des Stoffsystems bei der Phasenumwandlung infolge der wirksamen Stabilisierung mit Hilfe dreidimensionaler Molekülgerüste vermieden wird. Infolge der reversiblen Umwandlung des Stoffsystems wird sowohl die Phasenumwandlungsenthalpie als auch die spezifische Wärme genutzt. Daraus ergibt sich ein hoher thermischer Nutzgrad, der wesentlich gegenüber herkömmlichen Nutzgraden, z. B. denen des Glaubersalzes oder des Calciumchlorid-hexahydrats, liegt. Das dreidimensionale Molekülgerüst gewährleistet infolge Coulombscher bzw. London-van der Waalsscher Wechselwirkungen sowie im Grenzfall auch direkter mechanischer Wechselwirkungen eine hohe Stabilität gegen eine Sedimentation von Teilen des Stoffsystems oder Stratifikation des Kristallisationsinitiator. Durch den Kristallisationsinitiator wird die Reversibilität des Systems im Zusammenwirken mit den Einschlußverbindungen gewährleistet. Diese Gewährleistung ist sowohl in räumlicher als auch in zeitlicher Hinsicht gegeben. Das Dispersionsagens bewirkt eine räumliche Gleichverteilung des Stabilisators im Speichermedium. Das erfindungsgemäße Mehrkomponenten-System ist infolge seiner hohen Stabilität in besonderer Weise für den Einsatz in makroverkapselten Systemen geeignet, beispielsweise in Hybrid- und Kaskaden-Speichern. Es zeichnet sich durch seine geringe thermische Volumen-Dilatation aus. Aufgrund der hohen Stabilität ist es möglich, Substanzen mit technischem Reinheitsgrad zu verwenden, wodurch eine große Wirtschaftlichkeit erreicht werden kann. Bei Einsatz von di-Natriumhydrogen-phosphat-dodecahydrat für das Stoffsystem kann dieses auf der Basis eines stöchiometrischen Ansatzes von di-Natriumhydrogenphosphat und demineralisiertem Wasser dargestellt werden, was gleichfalls die Wirtschaftlichkeit erhöht. Ein geeignetes Vorgehen besteht insbesondere bei großchemischer Darstellung ferner darin, daß man Orthophosphorsäure, zum Beispiel technische Orthophosphorsäure, mit Natriumhydroxid unter Bildung des di-Natriumhydrogenphosphatdihydrats zur Reaktion bringt und dieses durch Substitution von Wasser während des Ansatzes des Gesamtsystems zum Dodecahydrat hydratisiert.

Weiterbildungen der Erfindung

Vorzugsweise kann das Mehrkomponenten-System ein Bakteriostatikum, beispielsweise ein Fungizid umfassen, das einer Hydrolyse durch Mikroorganismen entgegenwirkt. Dabei kann das Bakteriostatikum eine für diese Zwecke übliche Substanz wie z. B. Hexachlorophen (bevorzugt), Chloramphenicol, 2-Phenylphenol, Parachlormetakresolchlorxylenol oder dergleichen sein und in einer Menge von 0,01 bis 0,15 Gew.%, bezogen auf den Gesamtansatz, zugesetzt werden. Besonders eignet sich der Zusatz eines Bakteriostatikums für makroverkapselte Mehrkomponenten-Substanz.

Vorteilhaft kann das Mehrkomponenten-System einen dem Stoffsystem wirkspezifisch angepaßten Enzyminhibitor umfassen, der der Verhinderung einer enzymatischen Hydrolyse der weitverzweigten Raumgerüste dient. Dieser Enzyminhibitor braucht nur in einer außerordentlich geringen Menge von größenordnungsmäßig $10^{-6}$ g, bezogen auf 1 kg Stabilisatormenge, zugesetzt zu werden, um die angestrebte Wirkung zu erzielen. Geeignet ist z. B. α-Amylase-Inhibitor (ex phaseolus vulgaris ; vertrieben von Calbiochem GmbH).

Nach einer anderen Ausbildungsmöglichkeit der Erfindung kann ein überstöchiometrischer Zusatz von demineralisiertem Wasser in das System einbezogen werden, der dazu dienen kann, eventuell eintretende Kristallwasserverluste auszugleichen.

Das Stoffsystem kann di-Natriumhydrogenphosphatdodecahydrat in einer Menge von 60 bis 90 Gew.%, bezogen auf den Gesamtansatz des Mehrkomponenten-Systems, sein. Die exakt zu wählende Menge bestimmt sich einerseits an energetischen Überlegungen, andererseits nach der Stabilität. Diese beiden Funktionen sind zu optimieren. Besonders günstige Ergebnisse erzielt man, wenn das Stoffsystem in einer Menge von 84 bis 86 Gew.% vorliegt.

Bei der Beschaffung der Ausgangsstoffe kann aus rein wirtschaftlichen Überlegungen das di-Natriumhydrogenphosphatdodecahydrat im Gesamtansatz aus di-Natriumhydrogenphosphat und dem stöchiometrischen, den 12 Molekülen Kristallwasser entsprechenden Anteil demineralisierten Wassers dargestellt werden. Noch vorteilhafter ist das oben beschriebene Verfahren, bei dem Orthophosphorsäure und Natriumhydroxid zum Dihydrat umgesetzt werden und dieses dann zum Dodecahydrat hydratisiert wird.

Der Stabilisator besteht aus 60-85, bevorzugt 80 Gew.% $\alpha[1 \rightarrow 4], \alpha[1 \rightarrow 6]$ glycosidisch verknüpftem Polysaccharid und 15-40, bevorzugt 20 Gew.% $\alpha[1 \rightarrow 4]$-Glucan.

Der Stabilisator liegt vorteilhaft in einer Menge von 5,5 bis 9,5 Gew.%, bezogen auf den Gesamtansatz 5,5 bis 9,5 Gew.%, bezogen auf den Gesamtansatz des Mehrkomponenten-Systems, vor. Damit läßt sich eine ungestörte gleichmäßige Ausbildung des Systems ohne besondere Konglomerationen bzw. Agglomerationen erreichen.

Um das Einschlußvermögern des Stabilisators zu potenzieren, kann das Mehrkomponenten-System in besonders bevorzugter Weise einen Co-Stabilisator, der rotationssymetrische Konformationen bildet, umfassen. Als besonders geeignet für den Co-Stabilisator hat sich Di-Ammoniumhydrogenphosphat erwiesen. Dabei kann sich die Menge des Co-Stabilisators zur Menge des Stabilisators vorteilhaft wie 1 : 6 bis 1 : 4 verhalten.

Wie bereits erwähnt, läßt sich die Wirkung des zuvor beschriebenen Stabilisators durch Verwendung von Vernetzungsmitteln weiter steigern. Als geeignete Vernetzungsmittel kommen insbesondere Methanol, Ethanol und Formaldehyd in Frage, wobei Formaldehyd bevorzugt ist. Das Gewichtsverhältnis von Vernetzungsmittel zu Co-Stabilisator soll etwa 1 : 1,5 bis 1 : 0,3, vorzugsweise 1 : 0,6 bis 1 : 0,4 und insbesondere 1 : 0,5 betragen.

In bevorzugter Weise kann der Kristallisationsinitiator aus der Stoffgruppe der Natriumsalzhydrate von monoklinem Kristalltypus ausgewählt sein. Solche Substanzen gewährleisten ein sicheres Re-Kristallisieren. Dabei hat sich als sehr vorteilhaft für den Kristallisationsinitiator tetra-Natriumdiphosphat-decahydrat erwiesen, das einen ausreichend hohen Schmelzpunkt hat.

Zum Zwecke einer ausgewogenen Dosierung innerhalb des Gesamtsystems kann der Kristallisationsinitiator in einer Menge von 1 bis 3,5, bevorzugt 2,5 Gew.%, bezogen auf den Gesamtansatz des Mehrkomponenten-Systems, vorliegen.

Wie oben beschrieben, ist es besonders vorteilhaft, zusätzlich zum Kristallisationspromotor epitaxische Impfkristalle einzusetzen. Hierfür eignet sich insbesondere Natriumthiosulfatpentahydrat. Bei Verwendung von epitaxischen Impfkristallen kann der Gesamtanteil von Initiator und epitaxischen Impfkristallen im Gesamtsystem im Bereich von 1 bis 6 Gew.% liegen, wobei der Anteil der epitaxischen Impfkristalle 1 bis 4 Gew.%, vorzugsweise 2,5 bis 3,5 Gew.% beträgt. Bewährt hat sich zum Beispiel die Verwendung von 1 Gew.% Initiator und 3,5 Gew.% Natriumthiosulfatpentahydrat.

Das Dispersionsagens kann vorzugsweise ein Natriumpyrophosphat sein und in einer Menge von 0,1 bis 0,5 Gew.%, bezogen auf den Gesamtansatz des Mehrkomponenten-Systems, zugesetzt werden. Eine solche Substanz gewährleistet eine räumlich-zeitliche Gleichverteilung des Stabilisators im Stoffsystem.

Zur Herstellung des erfindungsgemäßen Mehrkomponenten-Systems eignet sich in besonderer Weise ein Verfahren, bei dem der Ansatz des Sotffsystems mit Ultraschall bei einer Temperatur behandelt wird, die die thermische Eigenbewegung zur Interferenz mit dem angewendeten Ultraschallfeld führt. Ein solches Verfahren trägt ganz wesentlich dazu bei, die Feinstverteilung der Komponenten des Systems und eine Erhöhung des Dispersionsgrades zu bewirken. Dies ist eine wesentliche Voraussetzung für die Erzielung einer Höchstzahl an räumlich gleichverteilten Kristallisationszentren.

Vorteilhaft erfolgt diese Ultraschall-Behandlung bei einem Mehrkomponenten-System nach der Erfindung bei 40 bis 80 °C, vorzugsweise bei etwa 55 °C. In diesem Temperaturbereich betragen die bevorzugten Frequenzen 30 bis 60 kHz.

Die insgesamt mit der Erfindung sowie deren bevorzugten Weiterbildungen erzielbaren Vorteile bestehen vor allen Dingen neben den schon erwähnten noch darin, daß sich das Mehrkomponenten-System in hervorragender Weise makroverkapseln läßt, zumal es statisch zuverlässig arbeitet, also keiner äußeren mechanischen Einwirkungen bedarf, um beispielsweise die Keimbildung zu initiieren. Selbstverständlich läßt sich das Mehrkomponenten-System auch in kompakten, größervolumigen Speichern einsetzen. Insbesondere ist es mit dem erfindungsgemäßen thermischen Energiespeicher-System möglich, saisonale Substitutionsenergie (sog. « Alternativenergie ») in einem Speichersystem mit bisher unerreichter Kapazität und Langzeitcharakteristik durch Integration in ein thermisches System dem Hausbereich über lange Nutzungsperioden zuzuführen.

Beispiel 1

340,88 g — entsprechend 85,25 Gew.%, bezogen auf den Gesamtansatz — di-Natriumhydrogenphosphat-docecahydrat ($Na_2HPO_4 \times 12H_2O$) als Stoffsystem werden unter sukzessiver Zugabe von 6,5 Gew.% des Stabilisators, bestehend aus 80 % $\alpha[1 \rightarrow 4]$, $\alpha[1 \rightarrow 6]$ glycosidisch verknüpftem Polysaccharid und 20 % $\alpha[1 \rightarrow 4]$-Glucan unter ständigem Rühren weit über den Phasenumwandlungspunkt $T_u'' = 48$ °C des $Na_2HPO_4 \times 12H_2O$ erwärmt. Während der Erwärmung wird als Dispersionsagens 0,25 Gew.% Natriumpyrophosphat ($Na_7P_2O_7$) zugegeben.

Dieser Ansatz wird unter permanentem Rühren in einem Erlenmeyer-Kolben auf 75 °C erwärmt, also eine Temperatur, die weit über dem Phasenumwandlungspunkt $T_u'' = 48$ °C des Stoffsystems

$T_u' = 35{,}5$ °C
$$Na_2HPO_4 \times 12H_2O \rightleftharpoons Na_2HPO_4 \times 7H_2O + 5H_2O$$
$Tu'' = 48{,}8$ °C
$$Na_2HPO_4 \times 7H_2O \rightleftharpoons Na_2HPO_4 \times 2H_2O + 5H_2O$$
$T_u''' = 95{,}0$ °C
$$Na_2HPO_4 \times 2H_2O \rightleftharpoons Na_2HPO_4 \times 2H_2O$$

liegt.

Nach 15 Min. bei konstanten T = 75 °C wird dem Ansatz der Kristallisationsinitiator in Form von 2,5 Gew.% tetra-Natriumdiphosphat-decahydrat ($Na_4P_2O_7 \times 10H_2O$) zugegeben.

Nach weiteren 15 Min. wird dem Ansatz unter ständigem Rühren ein Co-Stabilisator in Form von 1,5 Gew.% di-Ammoniumhydrogenphosphat ($(NH_4)_2HPO_4$), das in 4 Gew.% demineralisiertem Wasser gelöst ist und auf 75 °C erwärmt wird, zugegeben. Nach gutem Durchmischen des Schmelzansatzes wird dieser in einem auf 75 °C erwärmten Behälter gegeben und ca. 5 Min. der Einwirkung eines Ultraschallfelds mit einer Nennfrequenz von ca. 35 kHz ausgesetzt. Anschließend wird der Ansatz in 24 Reaktionsgefäße zu je 10 ml mittels einer Bürettiereinrichtung abgefüllt und gasdicht verschlossen.

Diese Charge aus 24 Einheiten wird in mehr als 50 Zyklen bei einer Tauschermedientemperatur von 55 °C geschmolzen, d. h. geladen, und bei einer Temperatur von ca. 11,5 °C zur Kristallisation gebracht, d. h. entladen, ohne daß eine Verhaltensänderung des Speichermediums zu beobachten ist.

Auch bei längerem Tiefentladen über eine Zeit von ca. 70 h und anschließendem Wiederaufladen des Energiespeichermediums ist die Volumendilatation z. B. nach dem 25. Zyklus so gering, daß kein Glasbruch im ganzen Chargenkollektiv auftritt.

Beispiel 2

Die Bezugsmasse des Ansatzes beträgt

M = 7 500 g. Die Darstellung des Ansatzes (Speichermedium = Mehrkomponenten-System) wird wie folgt vorgenommen : 3 857,30 ml demineralisiertes $H_2O$, die dem stöchiometrischen Anteil der 12 Moleküle Kristallwasser im di-Natriumhydrogenphosphat-dodecahydrat im Gesantansatz entsprechen, werden mit 487,50 g Stabilisator, bestehend aus 80 % $\alpha[1 \rightarrow 4]$, $\alpha[1 \rightarrow 6]$ glycosidisch verknüftem Polysaccharid und 20 % $\alpha[1 \rightarrow 4]$-Glucan sowie 18,75 g Natriumpyrophosphat ($Na_4P_2O_7$) als Dispersionsagens versetzt und unter ständigem Rühren auf ca. 35 °C erwärmt.

Dann wird der stöchiometrische Anteil (2 534,2 g) des di-Natriumhydrogenphosphat-dodecyhydrat-Anhydrids ($Na_2HPO_4$) in den Teilansatz eingebracht. Durch die dann einsetzende exotherme Reaktion steigt die Temperatur im Teilansatz, und dieser wird dann durch weiteres Erwärmen auf eine Temperatur von 75 °C gebracht und gut durchmischt. Nach ca. 30 Min. werden dem Ansatz sukzessive 2,5 Gew.% tetra-Natriumdiphosphat-decahydrat ($Na_4P_2O_7 \times 10H_2O$) als Kristallisationsinitiator zugefügt. Bei konstanter Temperatur von 75 °C wird der Teilansatz mit 1,5 Gew.% (112,5 g) di-Ammoniumhydrogenphosphat ($(NH_4)_2HPO_4$) als Co-Stabilisator, das in 300 ml $H_2O$ gelöst und auf 75 °C erwärmt wird, versetzt und nach ca. 25 Min. dauerndem Rühren bei 75 °C in einem gasdichten Speicherbehälter abgefüllt. In den mit dem Energiespeichermedium beschickten Speicherbehälter wird ein Wärmetauschersystem eingebracht, durch das das Mehrkomponenten-Speichermedium Phasenumwandlungsenthalpie und spezifische Wärme aufnehmen oder abgeben kann.

Im hier beschriebenen Beispiel wird das Speichermedium bei einer Tauschertemperatur von ca. 77 °C geladen und bei einer Temperatur von ca. 12 °C entladen.

Es werden über 50 Zyklen (bei einer Zyklenzeit = « Periodendauer » = $t_z$ = 90 Min.) gefahren, ohne daß eine Beeinträchtigung der Reversibilität des Schmelz-/Kristallisations-Prozesses auftritt.

Auch bei oszillierender Fahrensweise im teilentladenen Zustand des Energiespeichers ist die Reversibilität des Schmelz-/Kristallisations-Prozesses voll gewährleistet, und ebenso die Zyklenstabilität bei anschließender vollständiger Be- und Entladung des beschriebenen thermischen Energie-Speichersystems.

Beispiel 3

Es werden 6 318,75 g di-Natriumhydrogenphosphat-dodecahydrat (Stoffsystem) mit 562,50 g des Stabilisators, bestehend aus der in Beispiel 1 und 2 aufgeführten Zusammensetzung, und 18,75 g des Dispersionsagens (wie Beispiel 1 und 2) zusammen in ein Ansatzgefäß gegeben und allmählich auf eine Temperatur von 75 °C erwärmt. Dabei wird für ein vollständiges Durchmischen gesorgt. Dem Teilansatz werden dann 187,50 g des Kristallisationsinitiators bei weiterem ständigen Rühren zugesetzt. Nach ca. 15 Min. bei konstanten T = 75 °C werden dem Teilansatz 112,50 g Co-Stabilisator (s. Beispiel 1 und 2), der in 300 ml demineralisiertem $H_2O$ gelöst ist und auf 75 °C erwärmt wird, zugesetzt. Nach weiterem Durchmischen wird das nunmehr vollständige Mehrkomponenten-System in einen Speicherbehälter gefüllt und gasdicht verschlossen.

Für den weiteren Ablauf und die Ergebnisse treffen die Ausführungen in Beispiel 2 zu.

Beispiel 4

4 012,5 g — entsprechend 80,25 Gew.%, bezogen auf den Gesamtansatz — di-Natriumhydrogenphosphatdodecahydrat ($Na_2HPO_4 \cdot 12H_2O$) als Stoffsystem werden unter sukkzessiver Zugabe von 6,5 Gew.% des Stabilisatorgemisches gemäß Beispiel 1 unter ständigem Rühren weit über dem Phasenumwandlungspunkt $T_u'' = 48$ °C des $Na_2HPO_4 \cdot 12H_2O$ erwärmt. Während der Erwärmung wird als Dispersionsagens 0,5 Gew.% Natriumpyrophosphat ($Na_4P_2O_7$) zugegeben.

Dieser Ansatz wird unter permanentem Rühren in einem Erlenmeyer-Kolben auf 65 °C erwärmt, also eine Temperatur, die weit über dem Phasenumwandlungspunkt (vgl. Beispiel 1) liegt.

Nach 15 Minuten bei konstanter T = 65 °C wird dem Ansatz der Kristallisationsinitiator in Form von 1,5 Gew.% tetra-Natriumdiphosphat-decahydrat ($Na_4P_2O_7 \cdot 10H_2O$) zugegeben.

Nach weiteren 15 Minuten wird dem Ansatz unter ständigem Rühren ein Co-Stabilisator in Form von 1,25 Gew.% di-Ammoniumhydrogenphosphat ($(NH_4)_2HPO_4$), das zusammen mit 3,5 Gew.% Natriumthiosulfatpentahydrat in 4 Gew.% demineralisiertem Wasser gelöst ist und auf 65 °C erwärmt wird, zugegeben. Nach gutem Durchmischen des Schmelzansatzes wird dieser in einen auf 65 °C erwärmten Behälter gegeben und mit 2,5 Gew.% Formaldehyd unter ständigem Rühren versetzt. Anschließend erfolgt wie in Beispiel 1 beschrieben eine etwa 5-minütige Einwirkung eines Ultraschallfelds mit einer Nennfrequenz von ca. 35 kHz. Dann wird der Ansatz in Kapseln zu je 100 g abgefüllt und gasdicht verschlossen.

Dieses Kollektiv wird in mehr als 100 Zyklen bei einer Tauschermedientemperatur von 55 °C geschmolzen, das heißt geladen, und bei einer Temperatur von ca. 11,5 °C zur Kristallisation gebracht, das heißt entladen, ohne daß eine Verhaltensänderung des Speichermediums zu beobachten ist.

Beispiel 5

Durch Umsetzung von 55 %iger Phosphorsäure mit 50 %iger Natronlauge und anchließendem Zusatz von Wasser zur Hydratisierung des zunächst gebildeten di-Natriumhydrogenphosphatdihydrats zum Dodecahydrat wurden 16 428,75 kg

di-Natriumhydrogenphosphat-dodecahydrat entsprechend 84,25 Gew.%, bezogen auf das Gesamtsystem, hergestellt. Die Temperatur des Stoffsystems betrug 75 °C. Unter ständigem Rühren wurden. 1 462,5 kg entsprechend, 7,5 Gew.% des Stabilisatorgemisches gemäß Beispiel 1 zugesetzt. Gleichzeitig wurden 48,75 kg Natriumpyrophosphat ($Na_4P_2O_7$) entsprechend 0,25 Gew.% zugegeben.

In einem zweiten Reaktionsgefäß wurden 292,5 kg $(NH_4)_2HPO_4$ und 487,5 kg $Na_4P_2O_7 \times 10H_2O$ in 780 Litern demineralisiertem Wasser bei 75 °C gelöst. Diese Lösung wurde unter ständigem Rühren dem obigen Ansatz zugesetzt.

Es wurde ein Mehrkomponenten-System von insgesamt 19 500 kg erhalten. Dieses Mehrkomponenten-System wurde in Einheiten von je 135 g verkapselt. Das so erhaltene Kollektiv zeigte über mehrere 100 Zyklen vollständige thermische Reversibilität.

## Ansprüche

1. Thermisches Energiespeicher-System zum Speichern von Phasenumwandlungsenthalpie mittels Wechselwirkung zu diesem Zweck ausgewählter Substanzen in einem Mehrkomponenten-System, das mindestens ein Stoffsystem mit mehreren Phasenumwandlungen, einen Stabilisator zur Erhöhung der Zyklenstabilität des Stoffsystems, der die Form eines dreidimensionalen Molekülgerüstes hat, das kanal- bzw. röhren- oder netzförmige Einschlußverbindungen bildet, und einen Kristallisationsinitiator zur Verbesserung der Reversibilität mit einem dem Stoffsystem angepaßen, hoch angesiedelten Phasenumwandlungspunkt umfaßt, dadurch gekennzeichnet, daß der Stabilisator aus 60 bis 85, bevorzugt 80 Gew.% $\alpha[1 \rightarrow 4]$, $\alpha[1 \rightarrow 6]$ glycosidisch verknüpftem Polysaccharid und 15 bis 40, bevorzugt 20 Gew.% $\alpha[1 \rightarrow 4]$-Glucan besteht und in dem Mehrkomponenten-System ein Dispersionsagens enthalten ist.

2. Thermisches Energiespeicher-System nach Anspruch 1, dadurch gekennzeichnet, daß das Stoffsystem di-Natriumhydrogenphosphat-dodecahydrat in einer Menge von 60-90 und vorzugsweise 84-86 Gew.%, bezogen auf den Gesamtansatz des Mehrkomponenten-Systems, ist.

3. Thermisches Energiespeicher-System nach Anspruch 1 oder 2, dadurch gekennzeichnet, daß ein überstöchiometrischer Zusatz von demineralisiertem Wasser in das System einbezogen ist.

4. Thermisches Energiespeicher-System nach einem der Ansprüche 1 bis 3, dadurch gekennzeichnet, daß der Stabilisator in einer Menge von 5,5 bis 9,5 Gew.%, bezogen auf den Gesamtansatz des Mehrkomponenten-Systems, vorliegt.

5. Thermisches Energiespeicher-System nach einem der Ansprüche 1 bis 4, dadurch gekennzeichnet, daß das Mehrkomponenten-System als Co-Stabilisator di-Ammoniumhydrogenphosphat enthält.

6. Thermisches Energiespeicher-System nach Anspruch 5, dadurch gekennzeichnet, daß sich die Menge des Co-Stabilisators zur Menge des Stabilisators wie 1 : 6 bis 1 : 4 verhält.

7. Thermisches Energiespeicher-System nach Anspruch 6 oder 7, dadurch gekennzeichnet, daß das Mehrkomponenten-System zusätzlich zum Co-Stabilisator ein Vernetzungsmittel enthält.

8. Thermisches Energiespeicher-System nach Anspruch 7, dadurch gekennzeichnet, daß das Gewichtsverhältnis von Vernetzungsmittel zu Co-Stabilisator 1 : 1,5 bis 1 : 0,3 vorzugsweise 1 : 0,6 bis 1 : 0,4 und insbesondere 1 : 0,5 beträgt.

9. Thermisches Energiespeicher-System nach Anspruch 7 oder 8, dadurch gekennzeichnet, daß das Mehrkomponenten-System als Vernetzungsmittel Methanol, Ethanol oder Formaldehyd enthält.

10. Thermisches Energiespeicher-System nach einem der Ansprüche 1 bis 9, dadurch gekennzeichnet, daß der Kristallisationsinitiator aus der Gruppe der Natriumsalzhydrate vom monoklinen Kristalltypus ausgewählt ist.

11. Thermisches Energiespeicher-System nach Anspruch 10, dadurch gekennzeichnet, daß der Kristallisationsinitiator tetra-Natriumdiphosphat-decahydrat ist.

12. Thermisches Energiespeicher-System nach einem der Ansprüche 1 bis 11, dadurch gekennzeichnet, daß der Kristallisationsinitiator in einer Menge von 1 bis 3,5, bevorzugt 2,5 Gew.%, bezogen auf den Gesamtansatz des Mehrkomponenten-System, vorliegt.

13. Thermisches Energiespeicher-System nach einem der Ansprüche 10 bis 12, dadurch gekennzeichnet, daß das Mehrkomponenten-System zusätzlich zum Kristallisationsinitiator epitaxische Impfkristalle enthält und der Gesamtanteil von Kristallisationsinitiator und epitaxischen Impfkristallen im Gesamtsystem 1 bis 6 Gew.% beträgt, wobei der Anteil der epitaxischen Impfkristalle 1 bis 4 und vorzugsweise 2,5 bis 3,5 Gew.% beträgt.

14. Thermisches Energiespeicher-System nach Anspruch 13, dadurch gekennzeichnet, daß das Mehrkomponenten-System Natriumthiosulfatpentahydrat-Kristalle als epitaxische Impfkristalle enthält.

15. Thermisches Energiespeicher-System nach einem der Ansprüche 1 bis 14, dadurch gekennzeichnet, daß das Dispersionsagens ein Natriumpyrophosphat ist.

16. Thermisches Energiespeicher-System nach einem der Ansprüche 1 bis 15, dadurch gekennzeichnet, daß das Dispersionsagens in einer Menge von 0,1 bis 0,5 Gew.%, bezogen auf den Gesamtansatz des Mehrkomponenten-Systems, vorliegt.

17. Verfahren zur Herstellung eines Mehrkomponenten-Systems für ein thermisches Energiespeicher-System nach einem der Ansprüche 1 bis 16, dadurch gekennzeichnet, daß der Ansatz des Mehrkomponenten-Systems mit Ultraschall bei einer Temperatur behandelt wird, die die thermische Eigenbewegung zur Interferenz mit dem angewendeten Ultraschall führt.

18. Verfahren nach Anspruch 17, dadurch gekennzeichnet, daß die Ultraschall-Behandlung bei 40 bis 80 °C, vorzugsweise 55 °C erfolgt und die Frequenzen 30 bis 60 kHz betragen.

**Claims**

1. Thermal energy storage system for storing phase transition enthalpy by interaction of substances selected for this purpose in a multi-component system containing at least one material system having several phase transitions, a stabilizer to increase the cycle stability of the material system, said stabilizer having a three-dimensional molecular structure, which forms channel- or tube-like or network-like inclusion compounds, and a crystallization initiator to improve the reversibility having a high-temperature phase transition point suited to the material system, characterized in that the stabilizer consists of 60 to 85, preferably 80 % by weight of $\alpha[1 \rightarrow 4]$, $\alpha[1 \rightarrow 6]$ glycosidically linked polysaccharide and 15 to 40, preferably 20 % by weight of $\alpha[1 \rightarrow 4]$ glucan and the multi-component system comprises a dispersing agent.

2. Thermal energy storage system according to claim 1, characterized in that the material system is disodium hydrogenphosphate dodecahydrate in an amount of 60 to 90 and preferably 84 to 86 % by weight, based on the total amount of the multi-component system.

3. Thermal energy storage system according to claim 1 or 2, characterized in that the system includes a hyperstoichiometric amount of demineralized water.

4. Thermal energy storage system according to any of claims 1 to 3, characterized in that the stabilizer is present in an amount ranging from 5.5 to 9.5 % by weight, based on the total amount of the multi-component system.

5. Thermal energy storage system according to any of claims 1 to 4, characterized in that the multi-component system includes as costabilizer diammonium hydrogen phosphate.

6. Thermal energy storage system according to claim 5, characterized in that the ratio of the amount of said costabilizer relative to the amount of said stabilizer ranges from 1 : 6 to 1 : 4.

7. Thermal energy storage system according to claims 6 or 7, characterized in that the multi-component system in addition to the costabilizer includes a crosslinking agent.

8. Thermal energy storage system according to claim 7, characterized in that the weight ratio of said crosslinking agent to said costabilizer is 1 : 1.5 to 1 : 0.3, preferably 1 : 0.6 to 1 : 0.4 and most preferred 1 : 0.5.

9. Thermal energy storage system according to claim 7 or 8, characterized in that the multi-component system includes as crosslinking agent methanol, ethanol or formaldehyde.

10. Thermal energy storage system according to any of claims 1 to 9, characterized in that the crystallization initiator is selected from the group comprising monoclinic crystal type hydrated sodium salts.

11. Thermal energy storage system according to claim 10, characterized in that the crystallization initiator is tetrasodium diphosphate decahydrate.

12. Thermal energy storage system according to any of claims 1 to 11, characterized in that the crystallization initiator is present in an amount of 1 to 3.5, preferably 2.5 % by weight, based on the total amount of said multi-component system.

13. Thermal energy storage system according to any of claims 10 to 12, characterized in that the multi-component system in addition to the crystallization initiator includes epitaxial seed crystals, and the total amount of said crystallization initiator and said epitaxial seed crystals in the total system ranges from 1 to 6 % by weight, said epitaxial seed crystals being present in an amount ranging from 1 to 4 and preferably 2.5 to 3.5 % by weight.

14. Thermal energy storage system according to claim 13, characterized in that the multi-component system contains sodium thiosulfate pentahydrate crystals as epitaxial seed crystals.

15. Thermal energy storage system according to any of claims 1 to 14, characterized in that the dispersing agent is a sodium pyrophosphate.

16. Thermal energy storage system according to any of claims 1 to 15, characterized in that the dispersing agent is present in an amount of 0.1 to 0.5 % by weight, based on the total amount of said multi-component system.

17. Process for producing a multi-component system for a thermal energy storage system according to any of claims 1 to 16, characterized in that the batch of the multi-component system is treated with ultrasound at a temperature which induces the thermal inherent motion into interference with the applied ultrasound.

18. Process according to claim 17, characterized in that the ultrasound treatment is carried out at 40 to 80 °C, preferably 55 °C, and the frequencies range from 30 to 60 kHz.

**Revendications**

1. Système d'emmagasinage d'énergie thermique pour l'emmagasinage d'enthalpie de changement de phase au moyen de l'interaction de substances choisies à cet effet dans un système à plusieurs constituants qui comprend au moins un système de substances avec plusieurs changements de phase, un stabilisant pour augmenter la stabilité de cycle du système de substances, qui a la forme d'un squelette moléculaire tridimensionnel qui forme des composés d'insertion en forme de canal, de tubes ou de réseau, et un agent d'amorçage de la cristallisation pour l'amélioration de la réversibilité ayant un point de changement de phase adapté au système de substances, de valeur élevée, caractérisé en ce que le stabilisant se compose de 60 à 85, de préférence de 80 % en poids de polysaccharide lié $\alpha[1 \rightarrow 4]$, $\alpha[1 \rightarrow 6]$

glucosidiquement et de 15 à 40, de préférence 20 % en poids d' α[1 → 4]-glucane et en ce qu'un agent de dispersion est contenu dans le système à plusieurs constituants.

2. Système d'emmagasinage d'énergie thermique selon la revendication 1, caractérisé en ce que le système de substances est du phosphate disodique dodécahydraté dans une proportion de 60 à 90 et de préférence de 84 à 86 % en poids par rapport à la charge totale du système à plusieurs constituants.

3. Système d'emmagasinage d'énergie thermique suivant la revendication 1 ou 2, caractérisé en ce qu'une addition d'eau déminéralisée supérieure à la quantité stoechiométrique est incorporée au système.

4. Système d'emmagasinage d'énergie thermique suivant l'une des revendications 1 à 3, caractérisé en ce que le stabilisant est présent dans une quantité de 5,5 à 9,5 % en poids par rapport à la charge totale du système à plusieurs constituants.

5. Système d'emmagasinage dénergie thermique suivant l'une des revendications 1 à 4, caractérisé en ce que le système à plusieurs constituants contient comme co-stabilisant du phosphate diammonique.

6. Système d'emmagasinage d'énergie thermique suivant la revendication 5, caractérisé en ce que le rapport de la quantité du co-stabilisant à la quantité du stabilisant est de 1 : 6 à 1 : 4.

7. Système d'emmagasinage d'énergie thermique suivant les revendications 6 ou 7, caractérisé en ce que le système à plusieurs constituants contient en plus du co-stabilisant un agent de réticulation.

8. Système d'emmagasinage d'énergie thermique suivant la revendication 7, caractérisé en ce que le rapport pondéral de l'agent de réticulation au co-stabilisant est de 1 : 1,5 à 1 : 0,3, de préférence de 1 : 0,6 à 1 : 0,4 et en particulier de 1 : 0,5.

9. Système d'emmagasinage d'énergie thermique suivant les revendications 7 ou 8, caractérisé en ce que le système à plusieurs constituants contient comme agent de réticulation du méthanol, de l'éthanol ou du formaldéhyde.

10. Système d'emmagasinage d'énergie thermique suivant l'une des revendications 1 à 9, caractérisé en ce que l'agent d'amorçage et la cristallisation est choisi parmi les hydrates de sels de sodium du type cristallin monochimique.

11. Système d'emmagasinage d'énergie thermique suivant la revendication 10, cartactérisé en ce que l'agent d'amorçage de la cristallisation est du diphosphate tétrasodique décahydraté.

12. Système d'emmagasinage d'énergie thermique suivant l'une des revendications 1 à 11, caractérisé en ce que l'agent d'amorçage de la cristallisation est présent dans une quantité de 1 à 3,5, de préférence, de 2,5 % en poids par rapport à la charge totale du système à plusieurs constituants.

13. Système d'emmagasinage d'énergie thermique suivant l'une des revendications 10 à 12, caractérisé en ce que le système à plusieurs constituants contient en plus de l'agent d'amorçage de la cristallisation des cristaux d'ensemencement épitaxiques et en ce que la proportion totale d'agent d'amorçage de la cristallisation et de cristaux d'ensemencement épitaxiques dans le système global est de 1 à 6 % en poids, la proportion des cristaux d'ensemencement épitaxiques étant de 1 à 4, de préférence de 2,5 à 3,5 % en poids.

14. Système d'emmagasinage de l'énergie thermique suivant la revendication 13, caractérisé en ce que le système à plusieurs constituants contient des cristaux de thiosulfate de sodium pentahydraté comme cristaux d'ensemencement épitaxiques.

15. Système d'emmagasinage d'énergie thermique suivant l'une des revendications 1 à 14, caractérisé en ce que l'agent de dispersion est un pyrophosphate de sodium.

16. Système d'emmagasinage d'énergie thermique suivant l'une des revendications 1 à 15, caractérisé en ce que l'agent de dispersion est présent dans une proportion de 0,1 à 0,5 % en poids par rapport à la charge totale de système à plusieurs constituants.

17. Procédé de préparation d'un système à plusieurs constituants pour un système d'emmagasinage d'énergie thermique suivant l'une des revendications 1 à 16, caractérisé en ce que la charge du système à plusieurs constituants est traitée par les ultrasons à une température qui conduit l'agitation thermique propre à l'interférence avec les ultrasons utilisés.

18. Procédé suivant la revendication 17, caractérisé en ce que le traitement par les ultrasons s'effectue à 40 à 80 °C, de préférence à 55 °C et en ce que les fréquences sont de 30 à 60 kHz.